# EUROPÄISCHE PATENTANMELDUNG

(11) **EP 1 367 739 A1**
(43) Veröffentlichungstag der Anmeldung: **03.12.2003**
(21) Anmeldenummer: 02011976.4
(22) Anmeldetag: 29.05.2002
(51) Int. Cl.: H04B 7/005, H04L 27/26

(54) **Verfahren zur Sendeleistungssteuerung in einem Multiträger-Funksystem**

(71) Anmelder: SIEMENS AKTIENGESELLSCHAFT, 80333 München (DE)
(72) Erfinder: Dillinger, Markus, 81737 München (DE); Luo, Jijun, 81677 München (DE)

(57) **Zusammenfassung**

Verfahren zur Sendeleistungssteuerung einer Sendestation (MS) in einem Funksystem, bei dem
- einer Verbindung (C) mehrere frequenzmäßig unterschiedliche Träger (f1, f2,...) zugeordnet werden,
- über die Träger Signale der Verbindung von der Sendestation zu einer Empfangsstation (BS) übertragen werden,
- die Träger der Verbindung in wenigstens zwei Gruppen (G1, G2) unterteilt werden, von denen jede wenigstens zwei der Träger aufweist,
- an die Sendestation für jede der Trägergruppen ein Steuersignal (CTR1, CTR2) zur Sendeleistungssteuerung übermittelt wird,
- und die Steuersignale in der Sendestation zur Steuerung der Sendeleistung (P) jedes Trägers der jeweiligen Trägergruppe verwendet werden.

## Beschreibung

Die Erfindung betrifft ein Sendeleistungssteuerung einer Sendestation (MS) in einem Funksystem, eine entsprechendes Funksystem sowie eine Sende- und eine Empfangsstation für ein solches System.

Mehrträger-(multi carrier-, MC-)Funkübertragungssysteme verwenden zur Übertragung von Signalen einer Verbindung mehrere Subträger, die innerhalb einer verfügbaren Übertragungsbandbreite angeordnet sind. Aufeinanderfolgende Daten des zu übertragenden Signals werden seriell/parallel gewandelt und anschließend über die verschiedenen Subträger übertragen. Ein Beispiel für ein Mehrträger-Funkübertragungssystem ist das sogenannte MC-CDMA-(Code Division Multiple Accesss-)Verfahren, bei dem eine Spreizung der zu übertragenden Daten mit einem Spreizcode erfolgt, bevor sie als sogenannte "Chips" den einzelnen Subträgern zugeodnet werden.

In der US 6,160,791 A ist ein Mehrträger-Funkübertragungssystem in Form eines OFDM-Systems (Orthogonal Frequency Duplex Modulation) beschrieben. Bei diesem sind die Subträger innerhalb der verfügbaren Übertragungsbandbreite voneinander beabstandet angeordnet, d.h. sie sind zueinander orthogonal. Die Leistung der 22 Subträger einer Verbindung wird über ein Steuersignal gesteuert, das mit den zu übertragenden Daten über die Subträger gesendet wird.

Der Erfindung liegt die Aufgabe zugrunde, die Leistungssteuerung in einem Mehrträger-Funkübertragungssystem zu verbessern.

Diese Aufgabe wird mit dem Verfahren gemäß Anspruch 1, dem Funksystem gemäß Anspruch 12, der Sendestation nach Anspruch 13 sowie die Empfangsstation nach Anspruch 14 gelöst.

Das erfindungsgemäße Verfahren zur Sendeleistungssteuerung einer Sendestation in einem Funksystem sieht vor, dass
- einer Verbindung mehrere frequenzmäßig unterschiedliche Träger zugeordnet werden,
- über die Träger Signale der Verbindung von der Sendestation zu einer Empfangsstation übertragen werden,
- die Träger der Verbindung in wenigstens zwei Gruppen unterteilt werden, von denen jede wenigstens zwei der Träger aufweist,
- an die Sendestation für jede der Trägergruppen ein Steuersignal zur Sendeleistungssteuerung übermittelt wird,
- und die Steuersignale in der Sendestation zur Steuerung der Sendeleistung jedes Trägers der jeweiligen Trägergruppe verwendet werden.

Bei den Trägern handelt es sich demnach um Subträger eines Mehrträger-Funkübertragungssystems. Dabei kann es sich beispielsweise um ein OFDM-Funksystem oder ein MC-CDMA-Funksystem handeln. Die Erfindung eignet sich insbesondere zur Anwendung auf Mobilfunksysteme, bei denen sich die Kanaleigenschaften der Träger ständig ändern. Die Erfindung beruht auf der Erkenntnis, dass jeder Träger eines Mehrträger-Systems individuelle Ausbreitungseigenschaften bzw. Kanaleigenschaften hat. Daher ist es vorteilhaft, nicht alle Träger einer Verbindung hinsichtlich ihrer Leistungssteuerung gleich zu behandeln.

Die Erfindung unterscheidet sich von der eingangs zitierten US 6,160,791 A vorteilhaft insofern, als nicht alle Träger einer Verbindung in gleicher Weise über ein einzelnes Steuersignal in ihrer Leistung gesteuert werden, sondern stattdessen durch die Unterteilung in Trägergruppen eine individuellere Leistungssteuerung der Träger möglich ist. Da jede Trägergruppe wenigstens zwei Träger aufweist, besteht jedoch im Vergleich zur getrennten Steuerung der Leistung für jeden Träger der Vorteil, dass weniger Steuersignale übertragen werden müssen. Es wird nämlich nur ein Steuersignal pro Trägergruppe verwendet. Dadurch lässt sich der Signalisierungsaufwand begrenzen.

Nach einer vorteilhaften Weiterbildung der Erfindung erfolgt die Zuordnung der Träger zu den Trägergruppen in Abhängigkeit von Kanaleigenschaften des jeweiligen Trägers. Bei den Kanaleigenschaften handelt es sich beispielsweise um das Fading, die Kanaldämpfung und die Störung durch andere Funkstationen, die sich empfängerseitig durch Bestimmung des Signal-zu-Rausch-Verhältnisses (signal to interference ratio, SIR) oder der Bitfehlerrate (bit error rate, BER) oder vergleichbare Verfahren erfassen lassen. Auf diese Weise lassen sich Träger mit ähnlichen Kanaleigenschaften jeweils einer gemeinsamen Trägergruppe zuordnen. Dies ermöglicht eine günstige Steuerung der Sendeleistung über das gemeinsame Steuersignal pro Trägergruppe, die die zwischen den Trägergruppen unterschiedlichen Kanaleigenschaften berücksichtigt.

Günstigerweise fallen die Träger verschiedener Trägergruppen in voneinander getrennte Frequenzbänder. Diese Frequenzbänder sind also zueinander orthogonal, d.h. sie überschneiden sich nicht. Mit anderen Worten liegen alle Träger einer Trägergruppe unmittelbar nebeneinander im zur Verfügung stehenden Frequenzband. Dies hat zur Folge, dass die Kanaleigenschaften und insbesondere das Fading für die Träger einer Gruppe relativ ähnlich sind.

Es ist vorteilhaft, wenn das Frequenzband wenigstens einer der Trägergruppen eine Kohärenzbandbreite hat, innerhalb derer die Träger ähnliche Kanaleigenschaften haben. Das bedeutet, dass nur Träger mit möglichst ähnlichen Kanaleigenschaften zu dieser Trägergruppe zusammengefasst werden. Die Anzahl der Träger pro Trägergruppe ist entsprechend klein zu wählen, um hiermit eine gute Leistungssteuerung für jeden Träger zu ermöglichen.

Weiterhin vorteilhaft ist es, wenn die Zuordnung der Träger zu Gruppen während des Bestehens der Verbindung aktualisiert wird. Das bedeutet, eine Änderung der Kanaleigenschaften für die Träger einer Gruppe, die eine gemeinsame Leistungssteuerung über ein gemeinsames Steuersignal ungünstig erscheinen lässt, kann durch eine erneute Auteilung der Träger auf neue Gruppen berücksichtigt werden.

Günstig ist es, wenn die Anzahl der Träger, die einer der Trägergruppen zugeordnet werden, abhängig von Eigenschaften der von der Empfangsstation über die Träger empfangenen Signale ist. Bei diesen Eigenschaften kann es sich z.B. um das oben bereits erwähnte Signal-zu-Rausch-Verhältnis (signal to interference ratio, SIR) oder die Bitfehlerrate (bit error rate, BER) handeln, die sich empfängerseitig bestimmen lassen.

Es ist dann weiterhin günstig, wenn bei der Aktualisierung der Zuordnung der Träger zu den Trägergruppen im Falle des Überschreitens eines Grenzwertes der Eigenschaften der durch die Empfangsstation empfangenen Signale wenigstens einer der Trägergruppen nur ein Träger zugeordnet wird. Dies bedeutet, dass beispielsweise zunächst für eine grobe Einstellung der Sendeleistung für alle Träger einer Gruppe ein gemeinsames Steuersignal verwendet wird und für eine feinere Einstellung, bei der die individuellen Unterschiede der Kanaleigenschaften der einzelnen Träger noch genauer berücksichtigt werden soll, jeweils ein Steuersignal pro Träger vorgesehen werden kann. Der Signalisierungsaufwand ist für die Grobeinstellung somit geringer als für die Feineinstellung.

Nach einer Weiterbildung der Erfindung erfolgt bei der Aktualisierung der Zuordnung der Träger zu den Trägergruppen im Falle des Überschreitens eines Grenzwertes der Eigenschaften der durch die Empfangsstation empfangenen Signale alle Träger der Verbindung einer gemeinsamen Trägergruppe zugeordnet werden, für die die Steuerung der Sendeleistung durch ein gemeinsames Steuersignal. Dies ist beispielsweise sinnvoll, wenn durch plötzliche krasse Änderung der Kanaleigenschaften eine gröbere Einstellung der Sendeleistung (zumindest für eine Übergangsphase) ausreicht. Das kann z.B. bei einer Übergabe einer Verbindung auf eine andere Empfangsstation (Handover) der Fall sein oder bei plötzlich auftretenden starken Störeinflüssen.

Günstig ist es auch, wenn vor der erstmaligen Zuordnung der Träger zu den unterschiedlichen Trägergruppen die Sendeleistung für alle Träger der Verbindung durch ein gemeinsames Steuersignal gesteuert wird und die Zuordnung der Träger zu den Trägergruppen erst im Falle des Überschreitens eines Grenzwertes der Eigenschaften der durch die Empfangsstation empfangenen Signale erfolgt. Dies bedeutet eine sehr grobe Steuerung der Sendeleistung beispielsweise während des Aufbaus oder zu Beginn einer Verbindung und eine erst nachfolgende feinere Unterscheidung in den angestrebten Sendeleistungswerten.

Vorteilhafter Weise signalisiert die Empfangsstation der Sendestation, in welcher Weise die Träger zu den Trägergruppen zugeordnet werden. Dies ist besonders dann sinnvoll, wenn die Empfangsstation auch die Steuersignale für die Leistungssteuerung ermittelt und an die Sendestation überträgt.

Das erfindungsgemäße Funksystem, die Sendestation und die Empfangsstation sind so ausgebildet und weisen die erforderlichen Komponenten auf, so dass sie das erfindungsgemäße Verfahren durchführen können.

Im Folgenden wird die Erfindung anhand von in den Figuren dargestellten Ausführungsbeispielen näher erläutert. Es zeigen:
- Fig.1: einen Ausschnitt eines erfindungsgemäßen Funksystems,
- Fig.2: eine Zuordnung von Trägern einer Verbindung im Funksystem nach Fig.1 zu Gruppen,
- Fig.3: ein anderes Ausführungsbeispiel für die Zuordnung von Trägern zu Gruppen,
- Fig.4: einen Regelkreis zur Erzeugung von Steuersignalen aus Fig.1,
- Fig.5: die Umschaltung zwischen zwei Betriebsmodi für den Regelkreis aus Fig.3 und
- Fig.6-9: verschiedene Ausführungsbeispiele für ein Übermittlungformat der Steuersignale aus Figur 1.

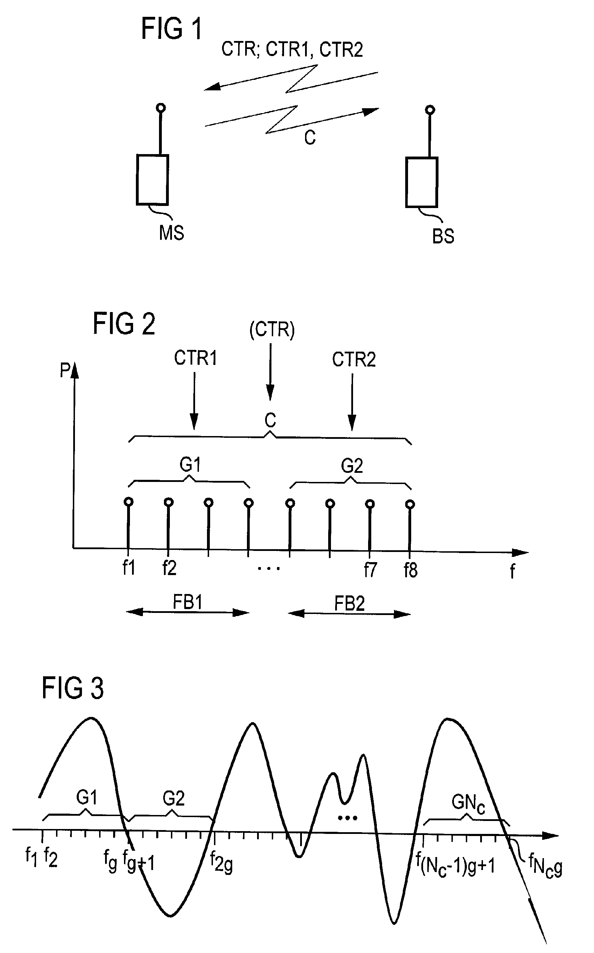

Figur 1 zeigt einen Ausschnitt aus einem erfindungsgemäßen Funksystem. Es handelt sich um ein Mobilfunksystem. Dargestellt ist eine Mobilstation MS und eine Basisstation BS. Zwischen beiden besteht eine Verbindung C. Hier von Interesse für die Übertragung von Nutzdaten (user data) ist nur die Aufwärtsrichtung (uplink) der Verbindung C, obwohl Verbindungen in Mobilfunksystemen überlicherweise bidirektional sind. Die Basisstation BS überträgt Steuersignale CTR, CTR1, CTR2 an die Mobilstation MS, die zur Steuerung der Sendeleistung der Mobilstation dienen. Bei dem Mobilfunksystem handelt es sich um ein Mehrträger-(MC-)System.

Figur 2 zeigt die für die Verbindung C in Figur 1 zur Verfügung stehenden Subträger f1, f2,....,f8. Gezeigt ist die Leistung P der Subträger über der Frequenz f. Die Träger f1,...,f8 sind äquidistant im für die Übertragung zur Verfügung stehenden Frequenzband angeordnet. Jeweils vier der acht Träger f1,...,f8 sind zu je einer Trägergruppe G1, G2 zusammengefasst. Die Anzahl der Träger pro Verbindung und pro Trägergruppe sowie die Anzahl der Trägergruppen ist natürlich nur beispielshaft. Die Träger f1,...,f4 der ersten Trägergruppe G1 befinden sich in einem ersten Frequenzband FB1, die Träger f5,....,f8 in einem zweiten Frequenzband FB2. Jeder Trägergruppe G1, G2 ist eines der Steuersignale CTR1, CTR2 zugeordnet, dass von der Basisstation BS an die Mobilstation MS übermittelt wird und von dieser zur Einstellung der Sendeleistung ihrer Träger der jeweiligen Trägergruppe verwendet wird.

Eines der Steuersignale CTR dient zu einem anderen Zeitpunkt (beispielsweise beim Aufbau der Verbindung C) zur Sendeleistungssteuerung aller Träger f1,...,f8 der Verbindung C (angedeutet durch die runden Klammern in Figur 2). Dies ermöglicht nur eine grobe Steuerung der Sendeleistung aller Träger. Ebenso kann zu einem wieder anderen Zeitpunkt (nämlich nach zuvor durchgeführter gröberer Leistungssteuerung mittels der Trägergruppen G1, G2) jeweils ein Steuersignal CTR pro Träger vorgesehen sein, so dass eine Feinsteuerung der Sendeleistung möglich ist. Die Steuersignale CTR, CTR1, CTR2 sind sogenannte TPC-(Transmit Power Control-)Bits, über die die Basisstation BS der Mobilstation MS signalisiert, ob die Sendeleistung der jeweiligen Trägergruppe um eine festgelegte Schrittgröße erhöht oder erniedrigt werden soll.

Die Anzahl von Trägergruppen und der Träger pro Gruppe kann während des Betriebs (z.B. periodisch) aktualisiert werden.

Figur 3 zeigt ein weiteres Ausführungsbeispiel für die Verteilung von Nc x g Trägern f1, f2,...,f_{Ncg} der Verbindung C auf Nc Trägergruppen G1, G2,...,GNc. Die Kurve in Figur 3 zeigt den Verlauf des Fadings über der Frequenz. Jeder Gruppe G1,..., GNc sind benachbarte Träger f1,... zugeordnet, die ähnliches Fadingsverhalten haben. Dabei kann die Anzahl der Träger pro Gruppe gleich oder unterschiedlich sein. Jeder Gruppe ist ein separates Steuersignal CTR zugeordnet. Alle Träger einer Gruppe fallen in eine Kohärenzbandbreite, für die die Fadingeigenschaften ähnlich sind. Somit lässt sich über die gemeinsamen Steuersignale CTR für alle Träger jeder Gruppe G1,... eine sinnvolle Leistungseinstellung vornehmen.

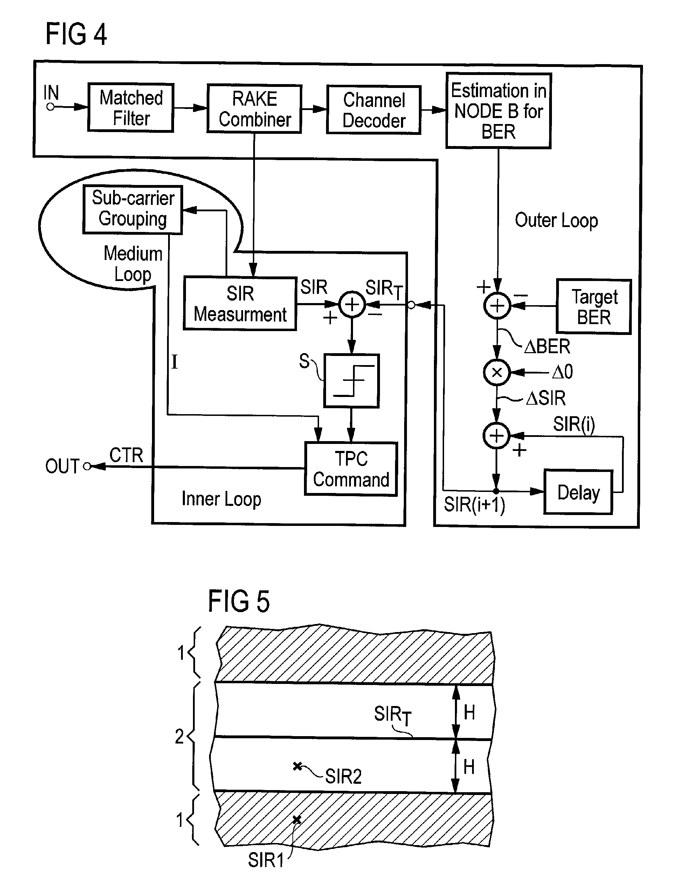

Figur 4 zeigt innerhalb der Basisstation BS aus Figur 1 einen Regelkreis zur Erzeugung der Steuersignalen CTR, die zur Einstellung der Sendeleistung der Mobilstation MS dienen. Die über einen Eingang IN empfangenen Funksignale der Verbindung C werden über angepasste Filter und einen RAKE-Empfänger sowie einen Kanaldecodierer einer Einrichtung zum Schätzen der Bitfehlerrate BER zugeführt. Die ermittelte Bitfehlerrate wird in einer äußeren Regelschleife (Outer Loop) mit einem Sollwert verglichen. Der Abweichungswert ΔBER für die Bitfehlerrate wird mit einem Umrechnungsfaktor ΔO multipliziert, so dass sich ein Abweichungswert ΔSIR für für das Signal-zu-Rausch-Verhältnis das ergibt. Hieraus wird mittels eines Verzögerungsgliedes ein Sollwert SIR_{T} für das Signal-zu-Rausch-Verhältnis erzeugt. Dieser wird für jeden Träger f1 ermittelt.

In einer inneren Regelschleife (Inner Loop) wird ein Ausgangssignal des RAKE-Empfängers herangezogen, um den Istwert des Signal-zu-Rausch-Verhältnisses SIR für jeden Träger zu bestimmen. Dieser Istwert SIR wird mit dem Sollwert SIR_{T} verglichen. Ein Schwellwertentscheider S dient zur Ermittlung der TPC-Bits, die Bestandteile der Steuersignale CTR sind, welche von der Basisstation BS über einen Ausgang OUT zur Mobilstation MS übertragen werden. Es werden TPC-Bits für jeden Träger f1 ermittelt.

Weiterhin zeigt Figur 4 eine mittlere Regelschleife (Medium Loop) für die Sendeleistung der Mobilstation MS, in der aufgrund der gemessenen SIR-Werten über die Zuordnung der Träger f1,... aus den Figuren 2 und 3 zu den Trägergruppen G1,... entschieden wird. Die SIR-Werte sind abhängig vom Fading des jeweiligen Trägers. Durch Zusammenfassung von Trägern mit ähnlichen SIR-Werten werden Träger mit ählichen Fadingeigenschaften zu jeweils einer Gruppe zugeordnet. Eine Information I über diese Zuordnung wird in zweierlei Hinsicht weiter verarbeitet: Zum einen hängt von ihr ab, welche und wieviele (nämlich nur soviele, wie Trägergruppen gebildet wurden) TPC-Bits als Steuersignale CTR an die Mobilstation MS übermittelt werden. Zum anderen wird die Information I über die Zuordnung der Träger zu den Trägergruppen ebenfalls als Bestandteil der Steuersignale CTR an die Mobilstation MS übertragen, damit diese die empfangenen TPC-Bits den richtigen Trägergruppen bzw. deren Trägern zuordnen kann.

Die äußere Regelschleife arbeitet langsamer als die innere Regelschleife. Die Regelgeschwindigkeit der mitteleren Regelschleife liegt zwischen denjenigen der äußeren und der inneren Regelschleife.

Figur 5 zeigt zwei der oben bereits angesprochenen Betriebsarten der Leistungssteuerung. In der Mitte ist der Sollwert des Signal-zu-Rausch-Verhältnisses SIR_{T} dargestellt. Die Istwerte SIR1, SIR2 können von diesem Sollwert unterschiedlich stark abweichen. In einem Abstand H in sowohl negativer als auch positiver Vorzeichrichtung vom Sollwert SIR_{T} ist jeweils ein Grenzwert festgelegt, der die Bereiche der beiden Betriebsarten voneinander trennt. Der Bereich 1 für die erste Betriebsart ist in Figur 5 schraffiert dargestellt und liegt außerhalb des Abstands H vom Sollwert, der Bereich 2 für die zweite Betriebsart ist nicht schraffiert. Befindet sich der Istwert SIR1 innerhalb des ersten Bereiches 1, besteht also ein relativ großer Abstand zum Sollwert SIR_{T}, erfolgt eine grobe Regelung der Sendeleistung der Träger f1,...., indem relativ viele Träger jeweils einer Trägergruppe zugeordnet werden. Dies können im Extremfall alle Träger der Verbindung C sein. Befindet sich der Istwert SIR2 dagegen im zweiten Bereich 2, also relativ nahe am Sollwert SIR_{T}, erfolgt eine Feinregelung der Sendeleistung der Träger, indem weniger Träger (im Extremfall nur einer) zu einzelnen Trägergruppen zusammengefasst werden.

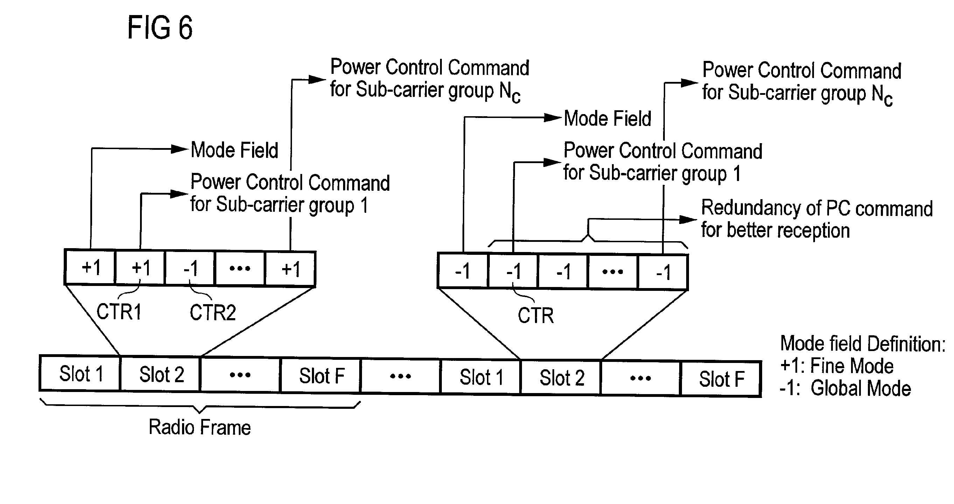

Die Figuren 6 bis 9 zeigen unterschiedliche Übermittlungformate für die von der Basisstation BS erzeugten Steuersignale CTR, wie sie an die Mobilstation MS übertragen werden.

Figur 6 ist zu entnehmen, dass die Datenübertragung über die Träger f1,... der Verbindung C aus Figur 1 in Funkrahmen mit jeweils F Zeitschlitzen erfolgt. In jedem zweiten Zeitschlitz wird eines der Steuersignale an die Mobilstation MS gesendet. Im ersten Funkrahmen (links in Figur 6) findet eine Feinregelung der Sendeleistung der Mobilstation MS statt. Dies wird durch "+1" in einem Betriebsartfeld (Mode Field) signalisiert. In dieser Betriebsart wird jeder Trägergruppe ein individuelles Steuersignal übermittelt (siehe die Datenelemente, die im Steuersignal CTR auf das Betriebsartfeld folgen). Im rechten Teil der Figur 6 erfolgt eine Grobregelung der Sendeleistung, was durch "1" im Betriebsartfeld signalisiert wird (Global Mode). Hier ist ein gemeinsames Steuersignal CTR zur Regelung der Sendeleistung für alle Trägergruppen vorgesehen. Dies ist gleichbedeutend mit einer Neuzuordnung der Träger zu einer einzigen, gemeinsamen Trägergruppe. Prinzipiell könnte auf diese Weise der Signalisierungsaufwand reduziert werden, da weniger Steuersignale CTR als zuvor übertragen werden müssen. In Figur 6 wird jedoch stattdessen das Steuersignal CTR mehrfach hintereinander übertragen. Hierdurch bleibt zwar der Signalisierungsaufwand gleich wie bei der Feinregelung. Allerdings kann hierduch die Sicherheit der Übertragung des Steuersignals erhöht werden.

Das Format aus Figur 6 ermöglicht die Unterscheidung zwischen einer Fein- und einer Grobregelung der Sendeleistung, obwohl die Anzahl der Träger pro Trägergruppe prinzipiell unverändert bleibt.

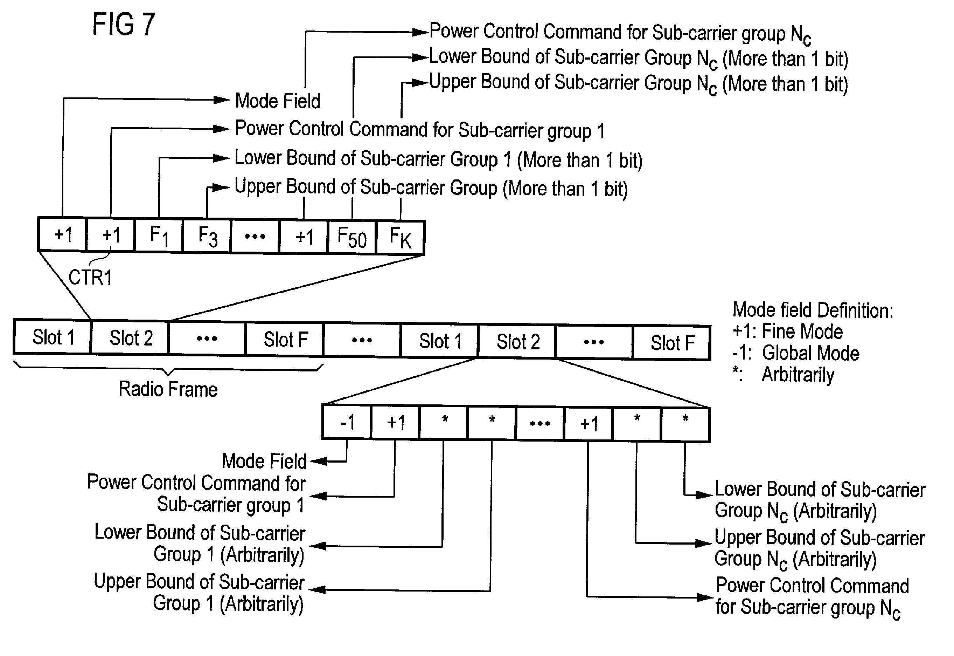

Figur 7 zeigt ein alternatives Signalisierungsformat für die Steuersignale CTR1. Bei diesem wird mit diesen gemeinsam eine Untergrenze und eine Obergrenze für die Träger der jeweiligen Trägergruppe G1,... übermittelt. Auf diese Weise signalisiert die Basisstation BS der Mobilstation MS, welche Träger welcher Trägergruppe zugeordnet sind und für welche Trägergruppe welches Steuersignal CTR1 verwendet werden soll.

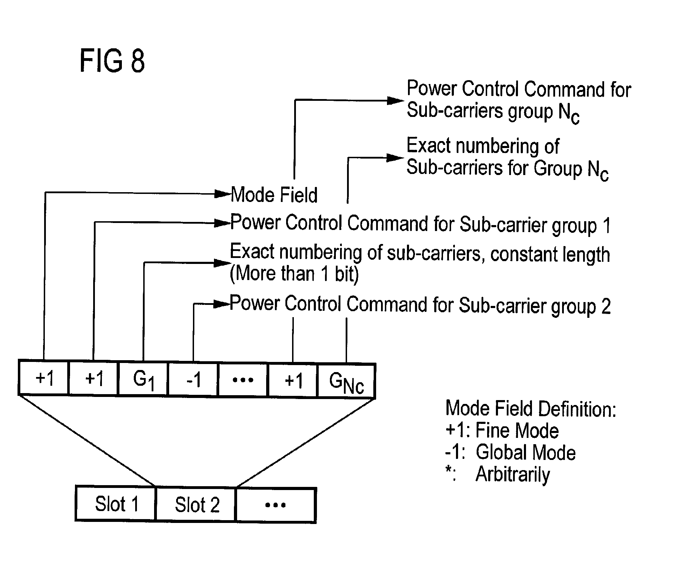

Figur 8 zeigt, dass alternativ auch jeder Träger der jeweiligen Trägergruppe explizit der Mobilstation MS signalisiert werden kann.

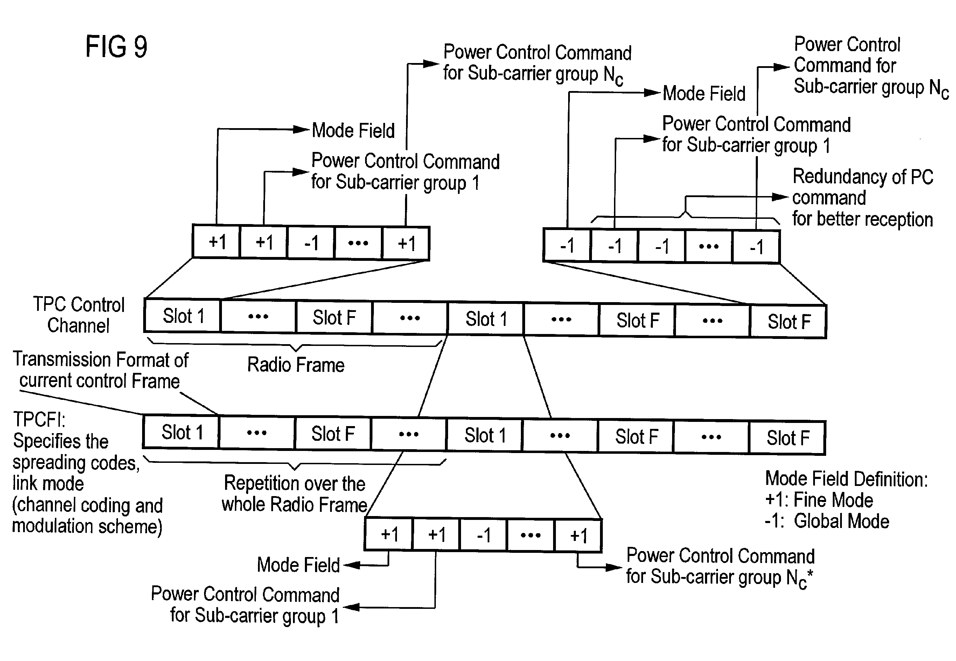

Figur 9 zeigt im oberen Teil ein entsprechendes Format wie Figur 6, wobei die Steuersignale über einen speziellen TPC-Steuerkanal übertragen werden. Im unteren Teil der Figur 9 ist angedeutet, dass über einen weiteren Steuerkanal TPCFI (Transmission Power Control Field Format Indicator) das Übertragungsformat für die Steuersignale CTR separat signalisiert wird. Dies schließt im Falle eines MC-CDMA-Funksystems die verwendeten Spreizcodes, die Kanalcodierung sowie das Modulationsverfahren ein. Das Format in Figur 9 ermöglicht, dass die Länge der Steuerfelder, die die Steuersignale enthalten, über den TPCFI ebenfalls signalisiert werden kann und damit nicht konstant sein muss. Der obere Teil von Figur 9 ist anstelle mit Figur 6 auch mit den Ausführungsbeispielen aus Figur 7 und 8 kombinierbar.

## Patentansprüche

1. Verfahren zur Sendeleistungssteuerung einer Sendestation (MS) in einem Funksystem, bei dem
- einer Verbindung (C) mehrere frequenzmäßig unterschiedliche Träger (f1, f2,...) zugeordnet werden,
- über die Träger Signale der Verbindung von der Sendestation zu einer Empfangsstation (BS) übertragen werden,
- die Träger der Verbindung in wenigstens zwei Gruppen (G1, G2) unterteilt werden, von denen jede wenigstens zwei der Träger aufweist,
- an die Sendestation für jede der Trägergruppen ein Steuersignal (CTR1, CTR2) zur Sendeleistungssteuerung übermittelt wird,
- und die Steuersignale in der Sendestation zur Steuerung der Sendeleistung (P) jedes Trägers der jeweiligen Trägergruppe verwendet werden.

2. Verfahren nach Anspruch 1, bei dem
die Zuordnung der Träger zu den Trägergruppen in Abhängigkeit von Kanaleigenschaften (SIR1, SIR2) des jeweiligen Trägers erfolgt.

3. Verfahren nach Anspruch 1 oder 2, bei dem
die Träger verschiedener Trägergruppen in voneinander getrennte Frequenzbänder (FB1, FB2) fallen.

4. Verfahren nach Anspruch 3, bei dem
das Frequenzband wenigstens einer der Trägergruppen eine Kohärenzbandbreite hat, innerhalb derer die Träger ähnliche Kanaleigenschaften haben.

5. Verfahren nach einem der vorstehenden Ansprüche, bei dem die Zuordnung der Träger zu Gruppen während des Bestehens der Verbindung aktualisiert wird.

6. Verfahren nach einem der vorstehenden Ansprüche, bei dem die Anzahl der Träger, die einer der Trägergruppen zugeordnet werden, abhängig von Eigenschaften der von der Empfangsstation über die Träger empfangenen Signale ist.

7. Verfahren nach Anspruch 5 und Anspruch 6, bei dem
bei der Aktualisierung der Zuordnung der Träger zu den Trägergruppen im Falle des Überschreitens eines Grenzwertes der Eigenschaften der durch die Empfangsstation empfangenen Signale wenigstens einer der Trägergruppen nur ein Träger zugeordnet wird.

8. Verfahren Anspruch 5 und Anspruch 6, bei dem
bei der Aktualisierung der Zuordnung der Träger zu den Trägergruppen im Falle des Überschreitens eines Grenzwertes der Eigenschaften der durch die Empfangsstation empfangenen Signale alle. Träger der Verbindung einer gemeinsamen Trägergruppe zugeordnet werden, für die die Steuerung der Sendeleistung durch ein gemeinsames Steuersignal erfolgt.

9. Verfahren nach einem der vorstehenden Ansprüche, bei dem
- vor der erstmaligen Zuordnung der Träger zu den unterschiedlichen Trägergruppen die Sendeleistung für alle Träger der Verbindung durch ein gemeinsames Steuersignal gesteuert wird
- und die Zuordnung der Träger zu den Trägergruppen erst im Falle des Überschreitens eines Grenzwertes der Eigenschaften der durch die Empfangsstation empfangenen Signale erfolgt.

10. Verfahren nach einem der vorstehenden Ansprüche, bei dem die Empfangsstation der Sendestation signalisiert, in welcher Weise die Träger zu den Trägergruppen zugeordnet werden.

11. Verfahren nach einem der vorstehenden Ansprüche, das auf ein Mobilfunksystem angewendet wird.

12. Funksystem, bei dem
- einer Verbindung (C) zwischen einer Sendestation (MS) und einer Empfangsstation (BS) mehrere frequenzmäßig unterschiedliche Träger (f1, f2,...) zugeordnet sind,
- die Träger dazu dienen, Signale der Verbindung von der Sendestation zu der Empfangsstation zu übertragen,
- die Träger der Verbindung in wenigstens zwei Gruppen (G1, G2) unterteilt sind, von denen jede wenigstens zwei der Träger aufweist,
- die Sendestation zum Empfang jeweils eines Steuersignals (CTR1, CTR2) zur Sendeleistungssteuerung für jede der Trägergruppen ausgebildet ist,
- und die Steuersignale in der Sendestation zur Steuerung der Sendeleistung (P) jedes Trägers der jeweiligen Trägergruppe dienen.

13. Sendestation (MS) für ein Funksystem,
- die so ausgebildet ist, dass sie mehrere frequenzmäßig unterschiedliche Träger (f1, f2,...) verwendet, um Signale einer Verbindung (C) zu einer Empfangsstation (BS) des Funksystems zu übertragen,
- wobei die Träger der Verbindung in wenigstens zwei Gruppen (G1, G2) unterteilt sind, von denen jede wenigstens zwei der Träger aufweist,
- die zum Empfang jeweils eines Steuersignals (CTR1, CTR2) zur Sendeleistungssteuerung für jede der Trägergruppen ausgebildet ist
- und die zur Verwendung der Steuersignale zur Steuerung der Sendeleistung (P) jedes Trägers der jeweiligen Trägergruppe ausgebildet ist.

14. Empfangsstation (BS) für ein Funksystem,
- die zum Empfang von von einer Sendestation (MS) des Funksystems ausgesendeten Signalen einer Verbindung (C) ausgebildet ist, wobei die Verbindung mehrere frequenzmäßig unterschiedliche Träger (f1, f2,...) verwendet,
- wobei die Träger der Verbindung in wenigstens zwei Gruppen (G1, G2) unterteilt sind, von denen jede wenigstens zwei der Träger aufweist,
- und die zum Übertragen jeweils eines Steuersignals (CTR1, CTR2) zur Sendeleistungssteuerung für jede der Trägergruppen an die Sendestation ausgebildet ist,
- wobei die Steuersignale dazu dienen, in der Sendestation zur Steuerung der Sendeleistung (P) jedes Trägers der jeweiligen Trägergruppe verwendet zu werden.
